# EUROPÄISCHE PATENTSCHRIFT

(11) **EP 1 831 981 B1**
(45) Veröffentlichungstag und Bekanntmachung des Hinweises auf die Patenterteilung: **01.02.2012**
(21) Anmeldenummer: 05850278.2
(22) Anmeldetag: 15.12.2005
(51) Int. Cl.: H02J 3/18, F03D 9/00

(54) **WINDPARKLEISTUNGSREGELUNG UND -VERFAHREN**
POWER CONTROL OF A WIND FARM AND METHOD THEREFOR
REGULATION DU RENDEMENT D'UN PARC D'EOLIENNES ET PROCEDE ASSOCIE

(30) Priorität: 17.12.2004 DE 102004060943
(43) Veröffentlichungstag der Anmeldung: 12.09.2007
(73) Patentinhaber: REpower Systems AG, 22335 Hamburg (DE)
(72) Erfinder: ALTEMARK, Jens, 24768 Rendsburg (DE); BECKER, Holger, 22457 Hamburg (DE); FRIEDERICH, Sebastian, 24768 Rendsburg (DE)
(74) Vertreter: Glawe, Delfs, Moll
(86) Internationale Anmeldenummer: PCT/EP2005/013508
(87) Internationale Veröffentlichungsnummer: WO 2006/066797

(56) Entgegenhaltungen:
- EP-A- 1 512 869
- WO-A-03/030329
- US-A1- 2004 178 639
- SVENSSON AND P KARLSSON J: "Wind Farm Control Software Structure" INTERNATIONAL WORKSHOP ON TRANSMISSION NETWORKS FOR OFFSHORE WIND FARMS, April 2002 (2002-04), Seiten 1-15, XP002254250
- CHRISTIANSEN P ET AL: "Grid Connection and Remote Control for the Horns Rev 150 MW Offshore Wind Farm in Denmark" INTERNATIONAL WORKSHOP ON TRANSMISSION NETWORKS FOR OFFSHORE WIND FARMS, März 2001 (2001-03), Seiten 1-11, XP002254252

## Beschreibung

Die Erfindung betrifft einen Windpark mit einer Mehrzahl von Windenergieanlagen und einem Parkmaster zur Steuerung der Windenergieanlagen, wobei die Windenergieanlagen einen mittels eines Rotors angetriebenen Generator zur Erzeugung elektrischer Leistung aufweisen, und der Parkmaster eine Leistungsregeleinrichtung aufweist.

In jüngerer Zeit werden Windenergieanlagen vorzugsweise nicht einzeln, sondern in Gruppen zusammengefasst als Windparks aufgestellt. Meist liegen solche Windparks an besonders windgünstigen Standorten, wie an der Küste oder auf Erhebungen. Da die einzelne Windenergieanlage heute bereits Leistungen erreicht, die früher ganzen Windparks vorbehalten waren, weisen moderne Windparks eine sehr hohe installierte elektrische Leistung auf. Der Anschluss solcher Windparks mit hoher Leistung an elektrische Energieversorgungsnetze ist nicht unproblematisch. Besonderes Augenmerk muss auf die Beibehaltung einer hohen Netzqualität gerichtet werden. Mit steigender Anzahl von Windparks, die an ein elektrisches Versorgungsnetz angeschlossen sind, sind striktere Vorgaben bezüglich des Verhaltens der Windparks am Netz durch die Energieversorgungsunternehmen erforderlich. Dazu zählt bspw. das Verhalten der Windparks gegenüber dem Netz bei Störungen. Ein Beispiel für solche Störungen sind Spannungseinbrüche, die durch einen Kurzschluss oder durch einen plötzlichen Ausfall von Kraftwerksleistung entstehen können.

Der Parkmaster eines Windparks fungiert als übergeordnete Steuerung für die einzelnen Windenergieanlagen des Windparks. Anforderungen des Betreibers des Windparks sowie des Betreibers des Energieversorgungsnetzes, an welches der Windpark angeschlossen ist, werden dabei in Steuersignale für die einzelnen Windenergieanlagen umgesetzt. Damit soll erreicht werden, dass der Windpark an seinem Verknüpfungspunkt mit dem Energieversorgungsnetz die gestellten Anforderungen erfüllt. Eine wichtige Funktion des Parkmasters ist, die in das Netz abgegebene Leistung zu überwachen und zu regeln, sowohl Wirk- wie auch Blindleistung.

Aus WO 03/030329 ist ein Windpark bekannt, der eine höhere Gesamtleistung aufweist, als die maximal mögliche Netzeinspeiseleistung. Dabei umfasst die Steuerung/Regelung einer Windenergieanlage einen Dateneingang, über den die elektrische Leistung bezogen auf die Nennleistung in einem Bereich von 0 bis 100% eingestellt werden kann. Dies ermöglicht eine Leistungsbegrenzung. Weiter kann durch einen Regler die Generatorleistung in Abhängigkeit von der Netzspannung geregelt werden. So können zum einen alle Windenergieanlagen jeweils auf eine Maximalleistung begrenzt werden. Zum anderen ist es möglich die Maximalleistung des gesamten Windparks zu begrenzen.

Eine Architektur einer Steuersoftware für einen Windpark ist aus dem Artikel "Wind Farm Control Software Structure" von Jörgen Svensson und Per Karlsson (April 2002, Seiten 1-15, International Workshop on Transmission Networks for Offshore Wind Farms) bekannt. Mit Hilfe der Software können langsam und schnell reagierende Gruppen von Windenergieanlagen getrennt betrieben werden. Jede Gruppe hat einen eigenen Führungsblock, wodurch den beiden Gruppen verschiedene Betriebspunkte zugewiesen werden. Dadurch kann die schnell reagierende Gruppe dazu genutzt werden, eine schnellere Reaktion des Windparks auf veränderte Leistungsanforderungen hervorzurufen.

Ein Nachteil dieser bekannten Anordnungen ist es, dass sie mitunter recht träge auf geänderte Anforderungen reagieren. Zwar ist der Parkmaster in der Regel mit einer ausreichend hohen Rechenleistung versehen, jedoch benötigt die Übertragung der Steuersignale zu den einzelnen Windenergieanlagen verhältnismäßig viel Zeit. Zwar sind üblicherweise gesonderte Kommunikationsleitungen vorgesehen, dennoch ergeben sich erhebliche Verzögerungen. Typische Verzögerungszeiten sind 1 bis 2 Sekunden für die Übertragung über die Kommunikationsleitungen und weitere 0,1 Sekunden für die Umwandlung, bis schließlich der Umrichter die Signale umsetzen kann. Durch diese langen Verzögerungszeiten ist das Verhalten des Windparks bei geänderten Anforderungen nicht optimal. Das gilt insbesondere bei schnell wechselnden Bedingungen, wie böigem Wind. Ferner kann es durch die hohen Verzögerungszeiten zu Schwingungen im Regelverhalten kommen.

Der Erfindung liegt die Aufgabe zugrunde, einen Windpark der eingangs genannten Art und ein Verfahren zum Betreiben bereitzustellen, das die oben genannten Nachteile vermeidet oder zumindest verringert. Die erfindungsgemäße Lösung liegt in den Merkmalen der unabhängigen Ansprüche. Vorteilhafte Weiterbildungen sind Gegenstand der abhängigen Ansprüche.

Erfindungsgemäß ist bei einem Windpark mit einer Mehrzahl von Windenergieanlagen, die elektrische Energie zur Abgabe in ein Netz erzeugen, und einem Parkmaster zur Steuerung der Windenergieanlagen, wobei die Windenergieanlagen einen mittels eines Rotors angetriebenen Generator aufweisen, und der Parkmaster eine mehrkreisig ausgeführte Leistungsregeleinrichtung aufweist, wobei ein erster Kreis auf eine erste Gruppe der Windenergieanlagen wirkt und ein zweiter Kreis auf eine zweite Gruppe der Windenergieanlagen wirkt, vorgesehen, dass die mehrkreisig ausgeführte Leistungsregeleinrichtung ein Blindleistungsregler ist, deren erster Kreis einen schnellen Regler aufweist, der eine wesentlich höhere Dynamik aufweist als ein langsamer Regler des zweiten Kreises, wobei der schnelle Regler schneller auf Führungs- und/oder Störgrößensprünge reagiert.

Nachfolgend seien einige verwendete Begriffe erläutert:
Unter einem Generator wird eine Maschine verstanden, die mechanische Energie in elektrische Energie umwandelt. Darunter fallen sowohl Gleichstrommaschinen, wie auch Generatoren für ein- oder mehrphasigen Wechselstrom. Es kann sich um eine Synchron- oder um eine Asynchronmaschine handeln. In der Regel ist an den Generator ein Umrichter angeschlossen, zwingend ist dies jedoch nicht. Der Umrichter ist vorzugsweise als Doppelumrichter ausgeführt. Er kann in verschiedenen Typologien ausgeführt sein, wie z. B. mit Spannungszwischenkreis, mit Stromzwischenkreis oder als Direktumrichter.

Unter einem Parkmaster wird eine Steuerungseinrichtung verstanden, die als übergeordnete Instanz auf die einzelnen Windenergieanlagen eines Windparks einwirkt. Im Regelfall ist sie dazu ausgebildet, die Abgabe der von den Windenergieanlagen erzeugten elektrischen Energie an einem Verknüpfungspunkt zu steuern. Weiter ist sie im Regelfall dazu ausgebildet, Vorgabewerte seitens des Windparkbetreibers oder des Betreibers des elektrischen Netzes, an das der Windpark angeschlossen ist, zu empfangen und umzusetzen. Der Parkmaster weist dazu eine mehrkreisig ausgeführte Leistungsregeleinrichtung auf. Er ist häufig als gesonderte Baueinheit ausgeführt; es soll aber nicht ausgeschlossen sein, dass er in einer der Windenergieanlagen des Parks angeordnet oder sogar vollständig integriert ist, so dass gewisse Komponenten gemeinsam mit der Anlagensteuerung der aufnehmenden Windenergieanlage verwendet werden. Zweckmäßigerweise ist die aufnehmende Windenergieanlage dem schnellen ersten Kreis zugeordnet.

Unter einer Gruppe von Windenergieanlagen wird eine natürliche Zahl von Windenergieanlagen verstanden, wobei die Mindestanzahl 1 beträgt.

Unter einer Dynamik wird ein Maß für die Geschwindigkeit eines Regelkreises beim Ausregeln einer Regelabweichung verstanden. Bei kontinuierlichen Reglerkonzepten, wie insbesondere dem PI und dem PID-Regler, ist die jeweilige Zeitkonstante des Reglers ein Maß für die Dynamik. Bei Reglerkonzepten mit endlicher Einstellzeit, wie insbesondere dem Deadbeat-Regler, ist die Einstellzeit ein Maß für die Dynamik. Der Begriff Dynamik ist hierbei im allgemeinen Sinn so zu verstehen, dass er sowohl das Antwortverhalten des Reglers auf Führungs- wie auf Störgrößensprünge beschreiben kann.

Die Erfindung beruht auf dem Gedanken, eine Doppelkreisstruktur für die mehrkreisig ausgeführte Leistungsregeleinrichtung vorzusehen. Die Windenergieanlagen des Parks werden in mindestens zwei Gruppen unterteilt, die von dem Parkmaster unterschiedlich angesteuert werden. Ein zweiter Kreis ist an die Windenergieanlagen der zweiten Gruppe angeschlossen, wobei er einen langsamen Regler aufweist, der in herkömmlicher Weise verhältnismäßig langsam auf Leistungsänderungen reagiert. Die Windenergieanlagen der ersten Gruppe sind hingegen an einen ersten Kreis angeschlossen, der einen schnellen Regler mit einer wesentlich höheren Dynamik als der langsame Regler aufweist. Damit ist es ermöglicht, durch Einwirken auf die Windenergieanlagen der ersten Gruppe schnell auf Sollwertänderungen oder auf Störungen zu reagieren. Die stationäre Genauigkeit über einen längeren Zeitraum wird dabei durch die an den langsamen Kanal angeschlossenen Windenergieanlagen der zweiten Gruppe sichergestellt. Die Erfindung vereinigt auf diese Weise die Vorteile einer schnellen Steuerung bezüglich eines schnellen Ausregelns von Störungen oder Sollwertsprüngen mit denen einer trägeren Regelung, wie die Resistenz gegenüber Schwingungen. Mit der erfindungsgemäßen Auftrennung der Leistungsregeleinrichtung in zwei Regelkreise mit unterschiedlicher Dynamik (im folgenden auch als langsame und schnelle Regler bezeichnet) gelingt dies auf verblüffend einfache Weise. Aufwendige Reglerkonzepte sind dazu nicht erforderlich. Die Erfindung kann auch mit verhältnismäßig einfachen Reglerkonzepten, wie P- oder PI-Reglern bereits mit guten Ergebnissen realisiert sein.

Die erfindungsgemäße mehrkreisige Regeleinrichtung ist als Blindleistungsregeleinrichtung ausgebildet. Für die Wirkleistung ist eine eigene Regeleinrichtung vorgesehen, die in an sich beliebiger Weise ausgeführt sein kann. Gerade bei Blindleistungsregeleinrichtungen ist es zur Aufrechterhaltung einer hohen Netzqualität wichtig, dass sie schnell reagierend ausgeführt sind. Mit der erfindungsgemäßen Blindleistungsregeleinrichtung wird durch die mehrkreisige Struktur besonders schnell auf Änderungen, Störungen etc. reagiert. Somit wird dank der Erfindung auch strengen Anforderungen der Netzbetreiber mit verhältnismäßig geringem Aufwand entsprochen. Die Erfindung macht sich mit der Mehrkreisstruktur und ihrem schnellen ersten Kreis die besonderen Eigenschaften der Blindleistung zunutze, dass sie kein mechanisches Äquivalent hat. Die Erfindung hat erkannt, dass damit ein schneller Regler gebildet wird, der auf schnelle Änderungen der Stellgröße "Blindleistung" reagiert, ohne dass Beschädigungen oder Beeinträchtigungen des mechanischen Systems (beispielsweise aufgrund von Überlastung durch stoßartige Wechsellast) zu befürchten wäre. Der erste Kreis ist damit einzig auf gutes Blindleistungs-Störverhalten optimiert, ohne Kompromisse in Bezug auf stationäre Genauigkeit eingehen zu müssen. Mit der erfindungsgemäßen Mehrkreis-Struktur wird dieser Vorteil voll genutzt.

Zweckmäßigerweise sind der erste und der zweite Kreis der Regeleinrichtung kaskadiert ausgeführt. Unter kaskadiert wird hierbei verstanden, dass ein Ausgangssignal des schnellen Reglers als ein Eingangssignal für den langsamen Regler genutzt wird. Das hat den Vorteil, dass nur eine Führungsgröße an die erfindungsgemäße mehrkreisige Leistungsregeleinrichtung angelegt zu werden braucht. Der schaltungstechnische Aufwand verringert sich dadurch. Weiter hat es gegenüber gesonderter Führungsgrößenvorgabe den Vorteil, dass die Notwendigkeit zur gegenseitigen Abstimmung der gesonderten Führungsgrößen entfällt. Die Gefahr von Instabilitäten auf Grund von nicht aufeinander abgestimmten oder gar einander widersprüchlichen Führungsgrößen, wie sie bei gesonderter Führungsgrößenbeaufschlagung auftreten könnte, ist auf diese Weise vermieden. Ein weiterer Vorteil hierbei ist, dass idealerweise damit der Sollwert für den langsamen Regler mittelwertfrei ist. Das Führungsgrößenverhalten des langsamen Reglers kann damit optimiert werden auf stationäre Genauigkeit um die Nulllage. Weiter kann der schnelle Regler vorzugsweise zum Ausgleich von Störungen (oder Transienten, Sollwertsprünge) ausgebildet sein.

Vorzugsweise ist der schnelle Regler direkt auf die Umrichter der Windenergieanlagen an der ersten Gruppe wirkend angeschlossen. Unter direkt wirkend wird hierbei verstanden, dass die Betriebssteuerung der einzelnen Windenergieanlagen zumindest funktionell umgangen ist. Damit wird erreicht, dass Verzögerungszeiten minimiert sind. Die Umrichter können schnell auf geänderte Stellgrößen des schnellen Reglers reagieren. Damit ergibt sich ein besseres Antwortverhalten des gesamten Windparks bei Störungen oder Sollwertsprüngen. Die direkte Verbindung kann auf verschiedene Weise bewerkstelligt sein. Eine vorteilhafte Möglichkeit liegt darin, den Ausgang des schnellen Reglers über einen eigenen Übertragungskanal mit den Umrichtern der Windenergieanlage der ersten Gruppe zu verbinden. Der eigene Übertragungskanal kann bspw. eine eigene Leitung sein. Eine solche Ausführung in Einzeladertechnik hat den Vorteil der konzeptionellen Einfachheit und Übersichtlichkeit; sie garantiert weiter kurze Übermittlungs- und damit Reaktionszeiten. Ein Nachteil ist aber der verhältnismäßig hohe Aufwand. Um diesen zu verringern, kann aber auch vorgesehen sein, an den Ausgang des schnellen Reglers ein gesondertes Hochgeschwindigkeitsdatennetz anzuschließen und mit den Umrichtern der Windenergieanlagen der ersten Gruppe zu verbinden. Unter Hochgeschwindigkeit wird hierbei verstanden, dass das Datennetz eine höhere Übertragungsgeschwindigkeit für die am Ausgang des schnellen Reglers anliegenden Daten aufweist als das zur sonstigen Kommunikation im Windpark verwendete Datennetz. Mit einem solchen Hochgeschwindigkeitsnetz lässt sich ebenfalls eine Verringerung der Übertragungszeit wie bei Einzeladertechnik erreichen, jedoch mit verringertem Installationsaufwand. Vorzugsweise ist das Hochgeschwindigkeitsdatennetz echtzeitfähig ausgebildet. Zur weiteren Verbesserung des Regelverhaltens kann vorgesehen sein, die Windenergieanlagen der ersten Gruppe elektrisch nahe an den Verknüpfungspunkt mit dem Netz anzuordnen. Unter elektrisch nahe wird hierbei verstanden, dass die Entfernung der Anschlussleitungen bis zu den jeweiligen Windenergieanlagen möglichst kurz ist. In der Regel folgt die elektrische Entfernung der räumlichen Distanz, jedoch können sich Abweichungen auf Grund von Umwegen der Leitungsführung ergeben. Durch die elektrisch kurze Anordnung wird erreicht, dass Stellsignale des schnellen Reglers nur über eine kurze Strecke zu übermittelt werden brauchen und damit schnell an den Umrichtern der Windenergieanlagen der ersten Gruppe anliegen. Weiter werden daraufhin folgende Änderungen der Leistungsabgabe dieser Windenergieanlage schnell an den Verknüpfungspunkt wirksam. Es ergibt sich damit eine doppelte Wirkung in Bezug auf die Verkürzung der Reaktionszeit.

Führungsgrößen für den Regler können konstant vorgegeben sein, vorzugsweise sind sie aber veränderbar. Damit dies auch extern ermöglicht ist, ist zweckmäßigerweise ein Führungsgrößenanschluss des Reglers an einen Steuereingang angeschlossen. Auf diese Weise können Vorgabewerte durch den Betreiber des Windparks oder durch den Netzbetreiber an den Regler übermittelt werden.

Gemäß einem weiteren Aspekt der Erfindung, der gegebenenfalls unabhängigen Schutz verdient, ist ein Windpark mit einer Mehrzahl von Windenergieanlagen, die elektrische Energie zur Abgabe in ein Netz erzeugen, ein Parkmaster zur Steuerung der Windenergieanlagen, wobei die Windenergieanlagen einen mittels eines Rotors angetriebenen Generator aufweisen, und der Parkmaster einen Leistungsregler aufweist, wobei die Windenergieanlagen in eine erste und eine zweite Gruppe unterteilt sind, einem ersten Kreis, der auf die erste Gruppe wirkt und einem zweiten Kreis, der auf die zweite Gruppe wirkt, vorgesehen, dass der langsame Regler Teil eines langsamen, auf die zweite Gruppe wirkenden zweiten Kreises einer mehrkreisigen Struktur ist, die zusätzlich einen schnellen ersten Kreis, umfassend einen schnellen Regler mit einer wesentlich höheren Dynamik als der langsame Regler, aufweist, der auf die zweite Gruppe wirkt. Bei dieser Regelkreisstruktur ist im Unterschied zu den voranstehenden Ausführungen der Parkmaster nicht zuständig für den schnellen Kreis für die erste Gruppe von Windenergieanlagen. Zweckmäßigerweise ist der schnelle Kreis autonom ausgeführt. Dies kann mit Vorteil dadurch erreicht werden, dass eine entsprechende Regelungsfunktionalität in die Steuereinrichtung einer der Windenergieanlagen der ersten Gruppe integriert ist. Eine solche Ausführungsform ist insbesondere dann von Vorteil, wenn die erste Gruppe aus lediglich einer einzigen Windenergieanlage besteht. Dies ermöglicht nicht nur einen unaufwendigen Aufbau, sondern auch ein gutes Betriebsverhalten dank kurzer Übermittlungszeiten. Es ist so leicht möglich, den schnellen Kreis so auszuführen, dass er direkt auf den Umrichter der Windenergieanlage wirkt. Es versteht sich, dass auch bei diesem Aspekt der Erfindung die Windenergieanlage des schnellen Kreises möglichst nahe an dem Verknüpfungspunkt angeordnet ist.

Für weitere Erläuterungen und vorteilhafte Ausführungsformen wird auf die zu dem ersten Aspekt der Erfindung gegebenen Beschreibung verwiesen.

Die Erfindung bezieht sich ferner auf ein Verfahren zum Betreiben eines Windparks mit einer Mehrzahl von Windenergieanlagen, die elektrische Energie zur Abgabe in ein Netz erzeugen, und einem Parkmaster zur Steuerung der Windenergieanlagen, wobei die Windenergieanlagen einen mittels eines Rotors angetriebenen Generator aufweist und der Parkmaster eine Leistungsregeleinrichtung aufweist, wobei ein erster Kreis auf eine erste Gruppe der Windenergieanlagen wirkt und ein zweiter Kreis auf eine zweite Gruppe der Windenergieanlagen wirkt, umfassend die Schritte Berechnen von Einstellwerten für eine in das Netz abzugebende elektrische Leistung der Windenergieanlagen gemäß einem Regelalgorithmus, Ausgabe der Einstellwerte an die Windenergieanlagen. Erfindungsgemäß ist es vorgesehen, einen ersten Sollwert für eine abzugebende Leistung einer ersten Gruppe von Windenergieanlagen in einem ersten Kreis des Regelalgorithmus und einen zweiten Sollwert für eine zweite Gruppe von Windenergieanlagen mittels eines zweiten Kreises des Regelalgorithmus zu berechnen, wobei für den ersten Kreis des Regelalgorithmus eine wesentlich höhere Dynamik als für den zweiten Kreis vorgesehen ist und der zweite Kreis einen langsamen Regler und der erste Kreis einen schnellen Regler aufweist, wobei der schnelle Regler schneller auf Führungsund/oder Störgrößensprünge reagiert, und die mehrkreisig ausgeführte Leistungsregeleinrichtung ei Blindleistungsregler ist.

Zur näheren Erläuterung wird auf die obenstehende Beschreibung verwiesen, aus der die Funktionsweise des erfindungsgemäßen Verfahrens hervorgeht.

Die Erfindung wird nachfolgend unter Bezugnahme auf die beigefügte Zeichnung erläutert, in der ein vorteilhaftes Ausführungsbeispiel der Erfindung dargestellt ist. Es zeigen:
- Fig. 1: eine schematische Ansicht eines Windparks gemäß einem Ausführungsbeispiel der Erfindung;
- Fig. 2 a,b: eine schematisierte Übersicht einer für den in Fig. 1 dargestellten Windpark verwendeten Reglerstruktur;
- Fig. 3 a, b: schematisierte Schnittdarstellungen von in den beiden Gruppen verwendeten Windenergieanlagen;
- Fig. 4: eine schematische Ansicht der Reglerstruktur mit Regelkreisen;
- Fig. 5: eine Darstellung eines alternativen Ausführungsbeispiels der in Fig. 2 dargestellten Reglerstruktur; und
- Fig. 6: eine schematische Ansicht der Reglerstruktur eines weiteren alternativen Ausführungsbeispiels.

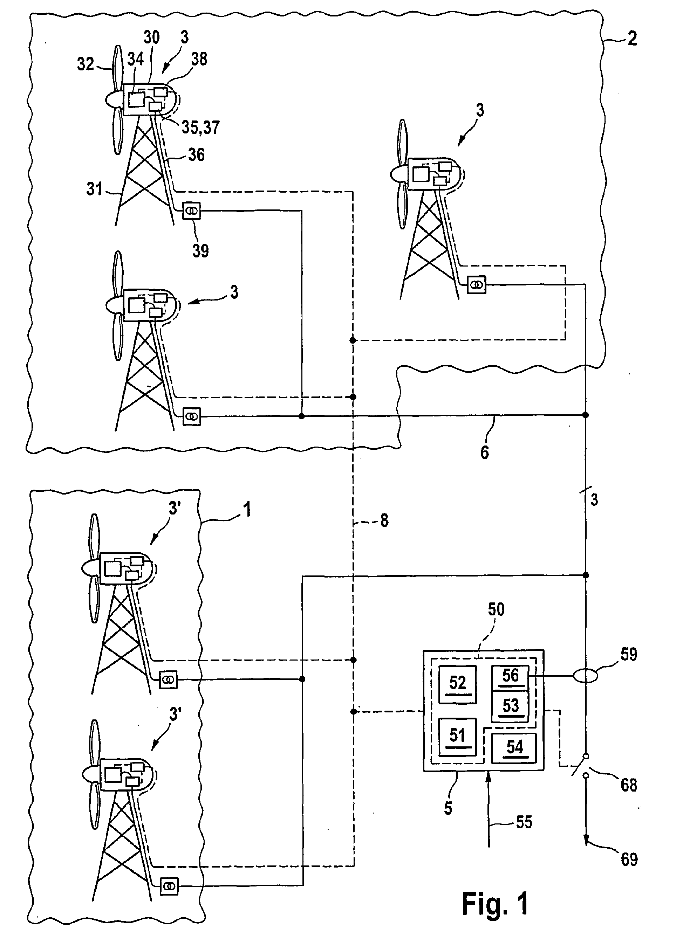

In Fig. 1 ist ein Ausführungsbeispiel für einen erfindungsgemäßen Windpark dargestellt. Er umfasst eine Mehrzahl von Windenergieanlagen 3 und einen zentralen Leitrechner (Parkmaster) 5. Die Windenergieanlagen 3 sind an ein windparkinternes Sammelnetz 6 angeschlossen, das über einen Verknüpfungspunkt 69 mit einem elektrischen Versorgungsnetz (nicht dargestellt) eines Energieversorgungsunternehmens verbunden ist.

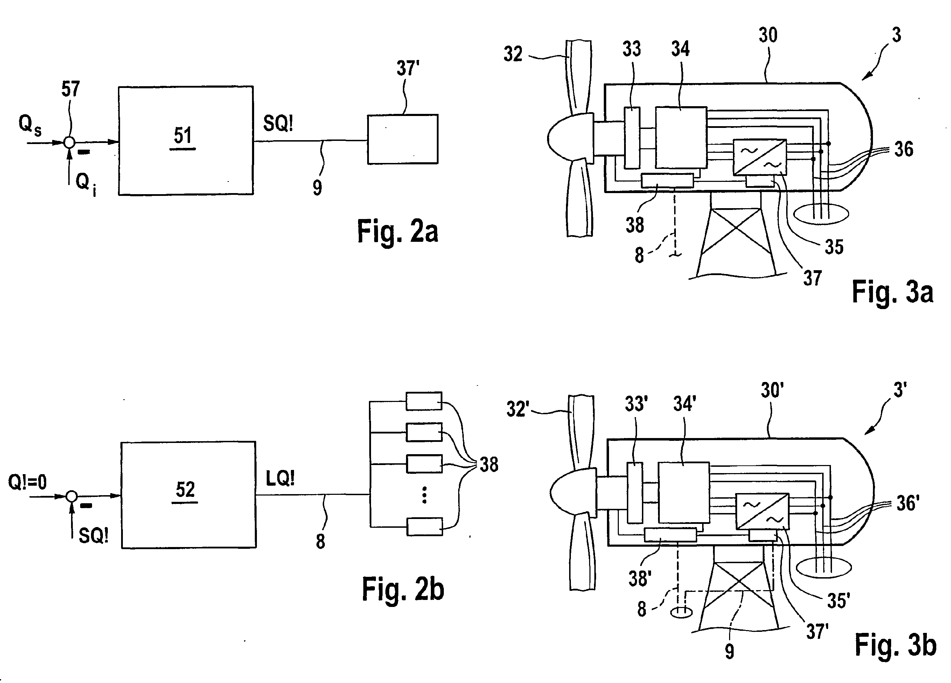

Der Aufbau einer Windenergieanlage 3 wird beispielhaft anhand der Fig. 1 und 3 a erläutert. Die Windenergieanlage 3 umfasst ein Maschinengehäuse 30, das schwenkbar auf einem Turm 31 angeordnet ist. An einer Stirnseite des Maschinengehäuses 30 ist ein Rotor 32 drehbar angeordnet. Der Rotor 32 treibt über eine Rotorwelle und ein Getriebe 33 einen Generator 34 an. Es handelt sich vorzugsweise um einen doppelt gespeisten Asynchrongenerator, jedoch sind auch andere Bauarten möglich. An den Generator 34 sind ein Umrichter 35 sowie Ausgangsleitungen 36 für die erzeugte elektrische Energie angeschlossen. Damit wird die von dem Generator 34 gelieferte elektrische Energie als dreiphasiger Drehstrom mit fester Frequenz (Netzfrequenz) bereitgestellt. Der Betrieb der Windenergieanlage 3 ist kontrolliert von einer Steuereinrichtung 38. Sie wirkt über geeignete, nur teilweise dargestellte Steuerleitungen auf die einzelnen Komponenten der Windenergieanlage 3 ein. Insbesondere ist sie verbunden mit einer Umrichtersteuerung 37, die (nicht dargestellte) aktive Schalter im Umrichters 35 derart ansteuert, dass sich die gewünschten Ausgangswerte für Strom, Spannung, Frequenz und Phase einstellen. Die Umrichtersteuerung 37 ist dazu ausgebildet, mittels des Umrichters 35 die von der Windenergieanlage 3 abgegebene Wirkleistung P und Blindleistung Q einzustellen. Weiter ist an der Windenergieanlage 3 ein Transformator 39 vorgesehen, der die von dem Umrichter 35 ausgegebene Spannung auf ein höheres Niveau zur Einspeisung in die windparkinterne Sammelleitung 6 transformiert. Die in Fig. 3b dargestellte Windenergieanlage 3' ist entsprechend ausgeführt. Sie weist noch einen Zusatzeingang an ihrer Umrichtersteuerung 37' auf.

Die Sammelleitung 6 ist an sämtliche Windenergieanlagen 3 des Windparks angeschlossen. Sie transportiert die von diesen erzeugte elektrische Energie zu einem (symbolhaft dargestellten) Verknüpfungspunkt 69, an dem sie in das (nicht dargestellte) Energieversorgungsnetz eingespeist wird. Die Sammelleitung 6 weist im dargestellten Ausführungsbeispiel eine baumartig verzweigte Struktur auf; genauso gut könnte sie auch in Busstruktur mit Stichleitungen ausgeführt sein, ebenfalls sind Mischformen möglich. An einer zentralen Stelle der Sammelleitung 6 ist vor dem Verknüpfungspunkt 69 eine Schalteinrichtung 68 vorgesehen. Sie ist dazu ausgebildet, den Windpark mit dem Verknüpfungspunkt 69 und damit mit dem Energieübertragungsnetz zu verbinden, oder es von diesem zu isolieren. Windparkseitig dieser Schalteinrichtung 68 ist eine Leistungsmesseinrichtung 59 für den Parkmaster vorgesehen. Gegebenenfalls kann eine weitere Leistungsmesseinrichtung (nicht dargestellt) für das Energieversorgungsunternehmen windparkseitig oder netzseitig der Schalteinrichtung 68 vorgesehen sein.

Die Windenergieanlagen 3 des Windparks sind in zwei Gruppen unterteilt. Es gibt eine erste Gruppe 1, die in dem dargestellten Ausführungsbeispiel 2 Windenergieanlagen 3' umfasst. Es handelt sich hierbei um solche Windenergieanlagen 3' des Windparks, die elektrisch nahe an dem Verknüpfungspunkt 69 angeordnet sind. Unter elektrisch nahe ist hierbei zu verstehen, dass die Längen der Leitungen gemessen von dem Transformator 39 der Windenergieanlage zum Verknüpfungspunkt 69 über das Sammelnetz 6 kurz sind. In der Regel bedeutet dies, dass die Windenergieanlagen auch räumlich nahe am Verknüpfungspunkt 69 angeordnet sind; unbedingt zwingend ist dies aber nicht.

Zum Betrieb des Windparks und zur Kontrolle über die am Verknüpfungspunkt 69 bereitgestellte elektrische Leistung ist der Parkmaster 5 vorgesehen. Er übt Leitfunktionen für die Windenergieanlage 3 des Windparks aus. Zur Übermittelung von Steuersignalen an die einzelnen Windenergieanlagen 3 des Windparks ist ein Signalleitungsnetz 8 vorgesehen. Es verbindet den Parkmaster 5 mit den Steuereinrichtungen 38 der einzelnen Windenergieanlagen 3. Der Parkmaster 5 umfasst einen Leitrechner als Leistungsregeleinrichtung 50 mit einer Mehrzahl von Funktionsmodulen 51 bis 53, ein Messmodul 56 sowie eine Ein-/Ausgabeeinheit 54. An diese ist ein Eingangsanschluss 55 angeschlossen. Er ist dazu ausgebildet, Leitanweisungen des Windparkbetreibers oder des Betreibers des Energieversorgungsnetzes zu empfangen und an die Leistungsregeleinrichtung 50 zu übermitteln; ggf. kann auch eine Rückkanalfähigkeit zur Ausgabe von Daten vorgesehen sein. An das Messmodul 56 ist die Leistungsmesseinrichtung 59 für die vom Windpark abgegebene elektrische Energie angeschlossen. Mittels der Funktionsmodule 51, 52 regelt die Leistungsregeleinrichtung 50 die abgegebene Blindleistung Q und mittels des Funktionsmoduls 53 die abgegebene Wirkleistung P.

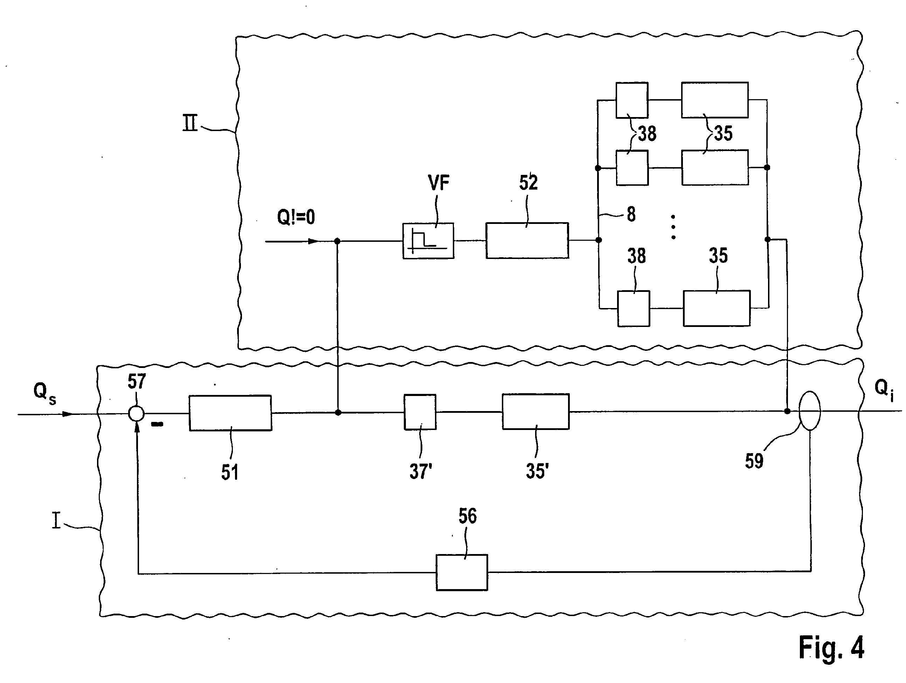

Es wird nun unter Bezugnahme auf Fig. 4 die Reglerstruktur erläutert. Die Funktionsmodule 51, 52 zur Regelung der Blindleistung Q sind als schnelle und langsame Regler ausgebildet. Ein schneller Kreis I ist gebildet durch das Funktionsmodul 51 als Regler, die Umrichtersteuerungen 37' der beiden Windenergieanlagen 3' der Gruppe 1 als Stellglieder, den zugeordneten Umrichter 35' als Regelstrecke und der Leistungsmesseinrichtung 59 mit dem Messmodul 56 als Rückführung. Letztere ist an einem negativen Eingang eines Summationsglied 57 angeschlossen, an dessen positivem Eingang ein Sollwert für die abzugebene Blindleistung Qₛ angelegt ist. Bei dem Regler im Funktionsmodul 51 handelt es sich beispielsweise um einen P- oder PD-Regler. Seine Zeitkonstante ist kurz bemessen, sie liegt vorzugsweise im Bereich von 0,5 ms-10 Sekunden, vorzugsweise 50 ms-3 Sekunden. Die Funktionsweise des schnellen Regelkreises wird unter Verweis auf Fig. 4 und Fig. 2 a beschrieben. Ein Sollwert Qₛ für die abzugebende Blindleistung wird durch den Betreiber des Windparks oder durch den Netzbetreiber vorgegeben. Diese Vorgabe kann explizit erfolgen, sie kann sich aber auch implizit ergeben, beispielsweise durch eine sogenannte Spannungsstatik. Dieser Sollwert wird an den schnellen Regelkreis I angelegt. Ein weiterer Eingangsparameter ist die tatsächlich abgegebene Blindleistung Qᵢ. Sie wird ebenfalls an den schnellen Regelkreis angelegt. Dieser Wert ist eine Messgröße, die mittels der Leistungsmesseinrichtung 59 mit dem Messmodul 56 aus der abgegebenen Spannung, dem abgegebenen Strom sowie der Phasenlage bestimmt wird. Daraus berechnet das Funktionsmodul 51 als schneller Regler einen schnellen Stellwert SQ!. Dieser wird über eine Direktverbindung 9 an die Umrichtersteuerung 37' der Windenergieanlagen 3' der Gruppe 1 angelegt. Die Umrichtersteuerung 37' steuert den ihr zugeordneten Umrichter 35' entsprechend den Stellwertvorgaben SQ! an. Auf diese Weise werden die Umrichter 35' so gesteuert, dass sie Störgrößen schnell ausregeln bzw. bei Sollwertsprüngen schnell auf den neuen Wert übergehen. Zur Rückführung dient dann die Messeinrichtung 59 mit dem Messmodul 56. Damit ist der schnelle Regelkreis I geschlossen.

Weiter ist ein langsamer Regelkreis II gebildet. Dieser umfasst das zweite Funktionsmodul 52 als langsamen Regler, an dessen Ausgang die Steuereinrichtung 38 der Windenergieanlagen 3 der Gruppe 2 angeschlossen sind. An dessen Eingang ist ein optionales Vorfilter VF angeschlossen. Es ist dazu vorgesehen, eine eventuell erforderliche Signalkonditionierung bzw. verarbeitung durchzuführen. In dem dargestellten Ausführungsbeispiel ist es als Tiefpass ausgeführt. An dessen Eingang ist eine Verknüpfungsstelle vorgesehen. An diese ist ein Sollwerteingang für die Blindleistung Q! angelegt, der aber fest auf 0 gelegt ist. Das bedeutet, dass der stationäre Sollwert für den langsamen Regelkreis II auf 0 gelegt ist. Nicht selten ist aber ein Wert ungleich Null angelegt, der auch relativ zur abgegebenen Leistung bestimmt sein kann (z. B. als Leistungsfaktor cos ϕ = 0,8). Die Verknüpfungsstelle ist weiter verbunden mit dem Ausgang des Funktionsmoduls 51 des schnellen Regelkreises I. Dessen Stellgröße SQ! wird optional geglättet und an die Verknüpfungsstelle angelegt. Damit wird erreicht, dass der Sollwert des langsamen Regelkreises II von dem schnellen Regelkreis I übernommen wird. Dadurch wird eine vorteilhafte Kopplung der beiden Regelkreise I und II erreicht. Der Regler in dem zweiten Funktionsmodul 52 ist vorzugsweise für stationäre Genauigkeit ausgebildet. In dem dargestellten Ausführungsbeispiel ist er als PI-Regler ausgeführt. Sehr gute Ergebnisse werden auch mit einem PID-Regler erzielt. Damit wird längerfristig eine ausreichende stationäre Genauigkeit erzielt. Die Reglerparameter können auf diesen Aspekt hin optimiert sein, da für den Ausgleich höher dynamischer Störungen der schnelle Regelkreis I vorgesehen ist.

Über das allgemeine Signalleitungsnetz 8 sind die am Ausgang des Funktionsmoduls 52 ausgegebenen Stellsignale LQ! an die Steuereinrichtung 38 der Windenergieanlagen der Gruppe 2 angelegt. Damit werden dann die Umrichter 35 der Windenergieanlagen 3 der Gruppe 2 so eingestellt, dass stationär der gewünschte Blindleistungssollwert über den Verknüpfungspunkt 69 in das Netz eingespeist wird. Der langsame Regelkreis II verfügt in diesem Ausführungsbeispiel nicht über eine eigene Rückführung, sondern verwendet dafür die durch die Messeinrichtung 59 und das Messmodul 56 gebildete Rückführung des schnellen Regelkreises I.

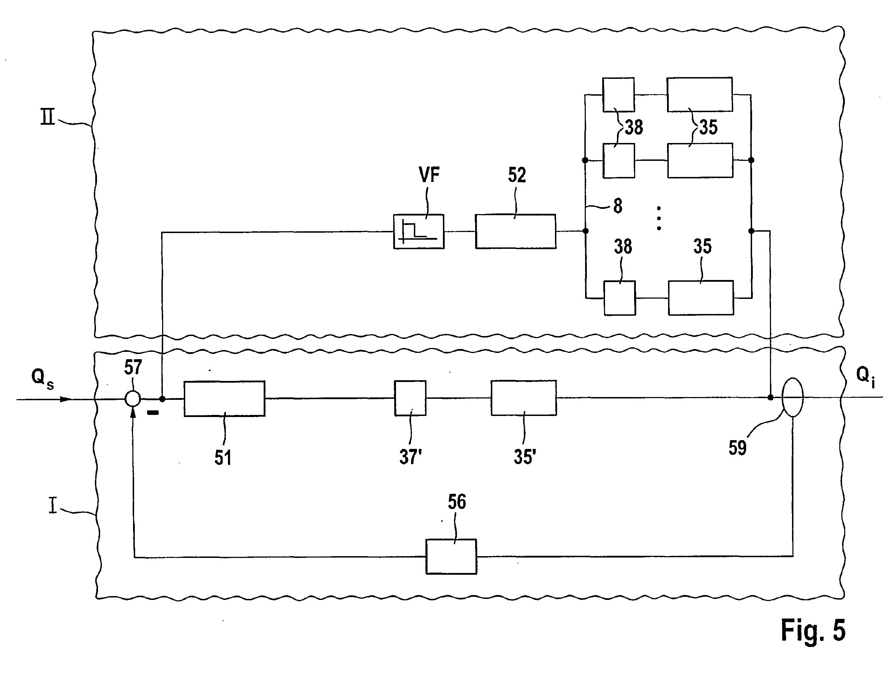

Eine Variante des in Fig. 4 dargestellten Schemas ist in Fig. 5 abgebildet. Sie unterscheidet sich im wesentlichen dadurch, dass der Sollwert für den langsamen Regelkreis II mit dem Funktionsmodul 52 als langsamen Regler nicht von der Stellgröße des schnellen Regelkreises I am Ausgang des Funktionsmoduls 51 als schnellen Regler abgegriffen ist, sondern vielmehr zwischen dem Summationsglied 57 und dem Eingang des Funktionsmoduls 51 abgegriffen ist. Im Unterschied zu der in Fig. 4 dargestellten Variante ist bei dieser Variante der langsame Regelkreis II nicht primär zur Erreichung einer stationären Genauigkeit der abgegebenen Blindleistung ausgebildet, sondern auch zum Ausgleich von Störungen. Damit können auch die Windenergieanlagen 3 der Gruppe 2 zum Ausgleich von Störungen, oder zur Unterstützung bei Sollwertsprüngen herangezogen werden. Damit dieser Vorteil realisiert werden kann, ist eine sorgfältige Abstimmung der Funktionsmodule 51, 52 als Regler der beiden Regelkreise I und II notwendig. Andernfalls besteht die Gefahr, dass es zu Regelschwingungen aufgrund unterschiedlichen Regelverhaltens der beiden Funktionsmodule 51, 52 kommt. Um dieses Risiko zu minimieren, ist im dargestellten Ausführungsbeispiel das Vorfilter VF als Bandsperre ausgebildet. Es ist so bemessen, dass im Hauptbereich der Störungen die Durchlasskurve ein Minimum hat. Damit wird erreicht, dass für die meisten Störungen das Funktionsmodul 51 schnellen Regelkreises I alleine ausregelnd wirkt. Bei bestimmten, besonders hochfrequenten Störungen, beispielsweise hervorgerufen durch für den schnellen Regelkreis I nicht beherrschbare Schwingungen, schaltet sich der langsame Regelkreis II zusätzlich zu. Mit seiner größeren Anzahl von Windenergieanlagen 3 der Gruppe 2 kann er in solchen Fällen in vorteilhafter Weise dämpfend einwirken, so dass die hochfrequenten Schwingungen der Blindleistung Q verringert werden.

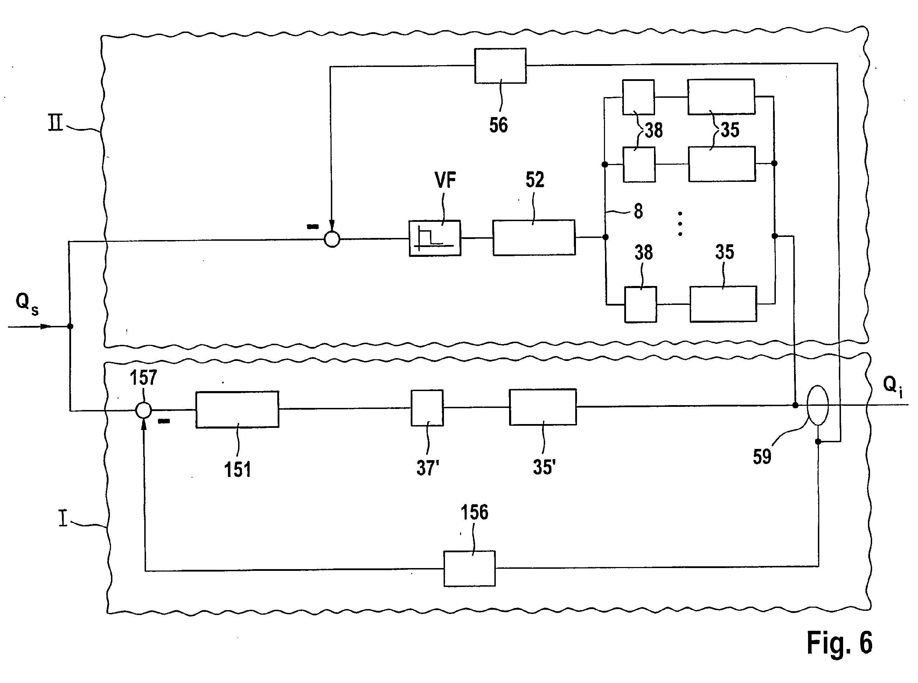

In Fig. 6 ist eine Reglerstruktur zu einem weiteren alternativen Ausführungsbeispiel gemäß dem nebengeordneten Anspruch dargestellt. Bei diesem Ausführungsbeispiel ist im Unterschied zu den vorangehend erläuterten Ausführungsbeispielen der Parkmaster nicht für die Regelung der ersten Gruppe von Windenergieanlagen ausgebildet, sondern regelt nur die zweite Gruppe II von Windenergieanlagen. Dazu ist der Parkmaster in der bereits vorstehend erläuterten Weise mit der Messeinrichtung 59 und dem Messmodul 56 versehen. Weiter ist der langsame Regelkreis II an einen Sollwerteingang für den Sollwert Qₛ für die abzugebende Blindleistung angeschlossen. Auf diese Weise wird mit dem Parkmaster 5 eine Regelung der Blindleistung Q erreicht, und zwar als langsamer Regelkreis II. Für den schnellen Regelkreis I ist vorgesehen, dass ebenfalls über die Messeinrichtung 59 die tatsächlich abgegebene Sollleistung erfasst wird. Zur Weiterverarbeitung ist ein Sondermessmodul 156 sowie ein Sondermodul 151 vorgesehen, welches als schneller Regler fungiert. Das Sondermodul 151 und vorzugsweise auch das Messmodul 156 sind zweckmäßigerweise in die Steuerungseinrichtung 38 der Windanlage des schnellen Regelkreises I integriert. Das ist insbesondere dann zweckmäßig, wenn, wie hier angenommen, nur eine Windenergieanlage dem schnellen Regelkreis I zugeordnet ist. An den Eingang des Sondermoduls 151 als schnellem Regler ist über ein Sondersummationsglied 157 wiederum der Sollwert Qₛ für die abzugebende Blindleistung sowie mit negativen Vorzeichen die gemessene tatsächlich abgegebene Blindleistung angeschlossen. Aufgrund der Integration der Sondermodule 156 und 151 in die Steuerungseinrichtung 38 der Windenergieanlage des schnellen Regelkreises I kann direkt und ohne Umwege auf den Umrichter 35' dieser Windenergieanlage eingewirkt werden. Damit ist eine hohe Regeldynamik ermöglicht. Störungen oder Sollwertsprünge können auf diese Weise schnell ausgeregelt werden. Darüber hinaus bietet diese Ausführungsform den Vorteil, dass sie konzeptionell einfach ist und keine Modifikationen am Parkmaster 5 erfordert.

## Patentansprüche

1. Windpark mit einer Mehrzahl von Windenergieanlagen (3, 3'), die elektrische Energie zur Abgabe in ein Netz erzeugen, und einem Parkmaster (5) zur Steuerung der Windenergieanlagen (3, 3'), wobei die Windenergieanlagen (3, 3') einen mittels eines Rotors (32, 32') angetriebenen Generator (34, 34') aufweisen, und der Parkmaster (5) eine mehrkreisig ausgeführte Leistungsregeleinrichtung aufweist, wobei ein erster Kreis (I) auf eine erste Gruppe (1) der Windenergieanlagen (3') wirkt und ein zweiter Kreis (II) auf eine zweite Gruppe (2) der Windenergieanlagen (3) wirkt,
**dadurch gekennzeichnet, dass**
die mehrkreisig ausgeführte Leistungsregeleinrichtung ein Blindleistungsregler ist, deren erster Kreis (I) einen schnellen Regler (51) aufweist, der eine wesentlich höhere Dynamik aufweist als ein langsamer Regler (52) des zweiten Kreises (II), wobei der schnelle Regler (51) schneller auf Führungs- und/oder Störgrößensprünge reagiert.

2. Windpark nach Anspruch 1,
**dadurch gekennzeichnet, dass**
der schnelle und der langsame Kreis (I,II) kaskadiert ausgeführt sind.

3. Windpark nach Anspruch 2,
**dadurch gekennzeichnet, dass**
ein Stellsignal des schnellen Reglers (51) als Führungssignal an den langsamen Regler (52) angeschlossen ist.

4. Windpark nach einem der vorangehenden Ansprüche,
**dadurch gekennzeichnet, dass**
der schnelle Regler (51) direkt auf die Umrichter (37') der Windenergieanlagen (3') der ersten Gruppe (1) wirkt.

5. Windpark nach Anspruch 4,
**dadurch gekennzeichnet, dass**
ein Ausgang des schnellen Reglers (51) über gesonderte Übertragungsleitungen auf die Umrichter (37') wirkt.

6. Windpark nach Anspruch 4,
**dadurch gekennzeichnet, dass**
ein Ausgang des schnellen Reglers (51) über ein gesondertes Hochgeschwindigkeitsdatennetz (9) auf die Umrichter (37') wirkt.

7. Windpark nach einem der vorangehenden Ansprüche,
**dadurch gekennzeichnet, dass**
die Windenergieanlagen (3') der ersten Gruppe (1) elektrisch nahe an einem Verknüpfungspunkt (69) angeordnet sind.

8. Windpark nach einem der vorangehenden Ansprüche,
**dadurch gekennzeichnet, dass**
der schnelle Regler (51) zum Ausgleich von Störungen ausgebildet und der langsame Regler (52) für stationäre Genauigkeit ausgebildet ist.

9. Windpark nach einem der vorangehenden Ansprüche,
**dadurch gekennzeichnet, dass**
eine Führungsgröße an den Regler über einen Steuereingang (55) für Vorgabewerte angelegt ist.

10. Windpark mit einer Mehrzahl von Windenergieanlagen (3, 3'), die elektrische Energie zur Abgabe in ein Netz erzeugen, einem Parkmaster (5) zur Steuerung der Windenergieanlagen (3, 3'), wobei die Windenergieanlagen (3, 3') einen mittels eines Rotors (32, 32') angetriebenen Generator (34, 34') aufweisen und der Parkmaster einen Leistungsregler einer mehrkreisig ausgeführten Leistungsregeleinrichtung aufweist, wobei die Windenergieanlagen (3, 3') in eine erste und eine zweite Gruppe (1, 2) unterteilt sind, einem ersten Kreis (I), der auf die erste Gruppe (1) wirkt und einem zweiten Kreis (II), der auf die zweite Gruppe (2) wirkt,
**dadurch gekennzeichnet, dass**
der Leistungsregler als ein langsamer Regler (52) Teil des langsamen, auf die zweite Gruppe (2) wirkenden zweiten Kreises (II) einer mehrkreisigen Struktur ist, die zusätzlich für den schnellen ersten Kreis (I) einen schnellen Regler (51) mit einer wesentlich höheren Dynamik als der langsame Regler (52), aufweist, der schneller auf Führungs- und/oder Störgrößensprünge reagiert und auf die erste Gruppe (1) wirkt, wobei die mehrkreisig ausgeführte Leistungsregeleinrichtung ein Blindleistungsregler ist.

11. Verfahren zum Betreiben eines Windparks mit einer Mehrzahl von Windenergieanlagen (3, 3'), die elektrische Energie zur Abgabe in ein Netz erzeugen, und einem Parkmaster (5) zur Steuerung der Windenergieanlagen (3, 3'), wobei die Windenergieanlagen jeweils einen mittels eines Rotors (32, 32') angetriebenen Generator (34, 34') aufweisen und der Parkmaster (5) eine Leistungsregeleinrichtung aufweist, wobei ein erster Kreis (I) auf eine erste Gruppe (1) der Windenergieanlagen (3') wirkt und ein zweiter Kreis (II) auf eine zweite Gruppe (2) der Windenergieanlagen (3) wirkt,
umfassend die Schritte,
Einlesen eines Vorgabewertes,
Berechnen von Einstellwerten für eine in das Netz abzugebende elektrische Leistung der Windenergieanlagen (3) gemäß einem Regelalgorithmus,
Ausgabe der Einstellwerte an die Windenergieanlagen (3, 3'),
**gekennzeichnet durch**
Berechnen eines ersten Sollwerts für eine abzugebende Leistung einer ersten Gruppe (1) von Windenergieanlagen (3') in einem ersten Kreis (I) des Regelalgorithmus und,
Berechnen eines zweiten Sollwerts für eine zweite Gruppe (2) von Windenergieanlagen (3) in einem zweiten Kreis (II) des Regelalgorithmus, wobei für den ersten Kreis (I) eine wesentlich höhere Dynamik als für den zweiten Kreis (II) vorgesehen ist und der zweite Kreis (II) einen langsamen Regler (52) und der erste Kreis (I) einen schnellen Regler (51) aufweist, wobei der schnelle Regler (51) schneller auf Führungs- und/oder Störgrößensprünge reagiert, und die mehrkreisig ausgeführte Leistungsregeleinrichtung ein Blindleistungsregler ist.

12. Verfahren nach Anspruch 11,
**gekennzeichnet durch**
Betreiben eines Windparks mit den Merkmalen nach einem der Ansprüche 1 bis 9.

## Claims

1. Wind farm having a plurality of wind energy installations (3, 3'), which generate electrical energy to be output to a power supply system, and a wind farm master (5) for controlling the wind energy installations (3, 3'), the wind energy installations (3, 3') having a generator (34, 34'), which is driven by means of a rotor (32, 32'), and the wind farm master (5) having a multi-loop power control device, with a first loop (I) acting on a first group (1) of the wind energy installations (3'), and a second loop (II) acting on a second group (2) of the wind energy installations (3), **characterized in that** the multi-loop power control device is a wattless power controller, the first loop (I) of said controller having a fast controller (51) which has a substantially higher dynamic than a slow controller (52) of the second loop (II), the fast controller (51) responding more quickly to jumps in reference variables and/or interference variables.

2. Wind farm according to Claim 1, **characterized in that** the fast and the slow loop (I, II) are cascaded.

3. Wind farm according to Claim 2, **characterized in that** an actuating signal of the fast controller (51) is connected as a reference signal to the slow controller (52) .

4. Wind farm according to one of the preceding claims, **characterized in that** the fast controller (51) acts directly on the converters (37') of the wind energy installations (3') of the first group (1).

5. Wind farm according to Claim 4, **characterized in that** an output of the fast controller (51) acts on the converters (37') via separate transmission lines.

6. Wind farm according to Claim 4, **characterized in that** an output of the fast controller (51) acts on the converters (37') via a separate high-speed data network (9).

7. Wind farm according to one of the preceding claims, **characterized in that** the wind energy installations (3') of the first group (1) are arranged electrically close to a connection point (69).

8. Wind farm according to one of the preceding claims, **characterized in that** the fast controller (51) is designed to compensate for faults, and the slow controller (52) is designed for steady-state accuracy.

9. Wind farm according to one of the preceding claims, **characterized in that** a reference variable is applied to the controller via a control input (55) for input values.

10. Wind farm having a plurality of wind energy installations (3, 3'), which generate electrical energy to be output to a power supply system, a wind farm master (5) for controlling the wind energy installations (3, 3'), the wind energy installations (3, 3') having a generator (34, 34'), which is driven by means of a rotor (32, 32'), and the wind farm master having a power controller of a multi-loop power control device, the wind energy installations (3, 3') being divided into a first and a second group (1, 2), namely a first loop (I) which acts on the first group (1), and a second loop (II), which acts on the second group (2), **characterized in that** the power controller is, as a slow controller (52), part of the slow, second loop (II), which acts on the second group (2), of a multi-loop structure, said structure also having, for the fast, first loop (I), a fast controller (51) with a substantially higher dynamic than the slow controller (52), said fast controller responding more quickly to reference variables and/or interference variables and acting on the first group (1), wherein the multi-loop power control device is a wattless power controller.

11. Method for operating a wind farm having a plurality of wind energy installations (3, 3'), which generate electrical energy to be output to a power supply system, and a wind farm master (5) for controlling the wind energy installations (3, 3'), the wind energy installations each having a generator (34, 34'), which is driven by means of a rotor (32, 32'), and the wind farm master (5) having a power control device, with a first loop (I) acting as a first group (1) of the wind power installations (3') and a second loop (II) acting as a second group (2) of the wind power installations (3),
comprising the steps of
writing an input value,
calculating set values for an electrical power of the wind energy installations (3) to be output to the power supply system in accordance with a control algorithm,
outputting the set values to the wind energy installations (3, 3'),
**characterized by**
calculation of a first desired value for a power to be output of a first group (1) of wind energy installations (3') in a first loop (I) of the control algorithm, and
calculation of a second desired value for a second group (2) of wind energy installations (3) in a second loop (II) of the control algorithm, a substantially higher dynamic being provided for the first loop (I) than for the second loop (II), and the second loop (II) having a slow controller (52) and the first loop (I) having a fast controller (51), the fast controller (51) responding more quickly to reference variables and/or interference variables, and the multi-loop power control device being a wattless power controller.

12. Method according to Claim 11, **characterized by** operation of a wind farm having the features according to one of Claims 1 to 9.

## Revendications

1. Parc d'éoliennes ayant une pluralité d'installations éoliennes (3, 3'), qui génèrent de l'énergie électrique à des fins de distribution dans un réseau, et un maître de parc (5) permettant de commander les installations éoliennes (3, 3'), les installations éoliennes (3, 3') comportant un générateur (34, 34') entraîné au moyen d'un rotor (32, 32') et le maître de parc (5) comportant un dispositif de régulation de puissance formé de plusieurs circuits, un premier circuit (I) agissant sur un premier groupe (1) des installations éoliennes (3') et un deuxième circuit (II) agissant sur un deuxième groupe (2) des installations éoliennes (3), **caractérisé en ce que** le dispositif de régulation de puissance formé de plusieurs circuits est un régulateur de puissance réactive dont le premier circuit (I) comporte un régulateur rapide (51) qui présente une dynamique essentiellement plus élevée qu'un régulateur lent (52) du deuxième circuit (II), le régulateur rapide (51) réagissant plus rapidement à des sauts de grandeur de commande et/ou de perturbation.

2. Parc d'éoliennes selon la revendication 1, **caractérisé en ce que** le circuit rapide et le circuit lent (I, II) sont montés en cascade.

3. Parc d'éoliennes selon la revendication 2, **caractérisé en ce que** un signal de réglage du régulateur rapide (51) est associé au régulateur lent (52) en tant que signal de commande.

4. Parc d'éoliennes selon l'une quelconque des revendications précédentes, **caractérisé en ce que** le régulateur rapide (51) agit directement sur le changeur de fréquence (37') des installations éoliennes (3') du premier groupe (1).

5. Parc d'éoliennes selon la revendication 4, **caractérisé en ce qu'**une sortie du régulateur rapide (51) agit sur le changeur de fréquence (37') par le biais de lignes de transmission particulières.

6. Parc d'éoliennes selon la revendication 4, **caractérisé en ce qu'**une entrée du régulateur rapide (51) agit sur le changeur de fréquence (37') par le biais d'un réseau de données à grande vitesse (9) particulier.

7. Parc d'éoliennes selon l'une quelconque des revendications précédentes, **caractérisé en ce que** les installations éoliennes (3') du premier groupe (1) sont disposées à proximité d'un point de raccordement (69).

8. Parc d'éoliennes selon l'une quelconque des revendications précédentes, **caractérisé en ce que** le régulateur rapide (51) est conçu pour compenser des perturbations et que le régulateur lent (52) est conçu pour une précision stationnaire.

9. Parc d'éoliennes selon l'une quelconque des revendications précédentes, **caractérisé en ce qu'**une grandeur de commande est appliquée au régulateur rapide par le biais d'une entrée de commande (55) pour des valeurs prescrites.

10. Parc d'éoliennes ayant une pluralité d'installations éoliennes (3, 3'), qui génèrent de l'énergie électrique à des fins de distribution dans un réseau, un maître de parc (5) permettant de commander les installations éoliennes (3, 3'), les installations éoliennes (3, 3') comportant un générateur (34, 34') entraîné au moyen d'un rotor (32, 32') et le maître de parc comportant un régulateur de puissance d'un dispositif de régulation de puissance formé de plusieurs circuits, les installations éoliennes (3, 3') étant réparties en des premier et deuxième groupes (1, 2), un premier circuit (I) agissant sur le premier groupe (1) et un deuxième circuit (II) agissant sur le deuxième groupe (2), **caractérisé en ce que** le régulateur de puissance, en tant que régulateur lent (52), fait partie du deuxième circuit lent (II), agissant sur le deuxième groupe (2), d'une structure à plusieurs circuits qui comporte en plus pour le premier circuit rapide (I) un régulateur rapide (51) qui a une dynamique essentiellement plus élevée que le régulateur lent (52), réagit plus vite à des grandeurs de commande et/ou de perturbation et agit sur le premier groupe (1), le dispositif de régulation de puissance formé de plusieurs circuits étant un régulateur de puissance réactive.

11. Procédé pour exploiter un parc d'éoliennes ayant une pluralité d'installations éoliennes (3, 3'), qui génèrent de l'énergie électrique à des fins de distribution dans un réseau, et un maître de parc (5) permettant de commander les installations éoliennes (3, 3'), les installations éoliennes comportant chacune un générateur (34, 34') entraîné au moyen d'un rotor (32, 32') et le maître de parc (5) comportant un dispositif de régulation de puissance, un premier circuit (I) agissant sur un premier groupe (1) d'installations éoliennes (3') et un deuxième circuit (II) agissant sur un deuxième groupe (2) d'installations éoliennes (3), comportant les étapes consistant à : lire une valeur prescrite, calculer des valeurs de réglage pour une puissance électrique des installations éoliennes (3) à distribuer dans le réseau selon un algorithme de régulation, délivrer les valeurs de réglage aux installations éoliennes (3, 3'), **caractérisé par** le calcul d'une première valeur de consigne pour une puissance à distribuer d'un premier groupe (1) d'installations éoliennes (3') dans un premier circuit (I) de l'algorithme de régulation, le calcul d'une deuxième valeur de consigne pour un deuxième groupe (2) d'installations éoliennes (3) dans un deuxième circuit (II) de l'algorithme de régulation, une dynamique essentiellement plus élevée étant prévue pour le premier circuit (I) que pour le deuxième circuit (II), le deuxième circuit (II) comportant un régulateur lent (52) et le premier circuit (I) comportant un régulateur rapide (51), le régulateur rapide (51) réagissant plus rapidement à des grandeurs de commande et/ou de perturbation, et le dispositif de régulation de puissance formé de plusieurs circuits étant un régulateur de puissance réactive.

12. Procédé selon la revendication 11, **caractérisé par** l'exploitation d'un parc d'éoliennes ayant les caractéristiques selon l'une quelconque des revendications 1 à 9.
